## Europäisches Patentamt

## European Patent Office

## Office européen des brevets

(11) Veröffentlichungsnummer: **0 183 740**
**B1**

(12) # EUROPÄISCHE PATENTSCHRIFT

(45) Veröffentlichungstag der Patentschrift:
10.05.89

(51) Int. Cl.⁴: **H 04 N 5/228**

(21) Anmeldenummer: **85902484.6**

(22) Anmeldetag: **01.06.85**

(86) Internationale Anmeldenummer:
**PCT/DE 85/00195**

(87) Internationale Veröffentlichungsnummer:
**WO 86/00187 (03.01.86 Gazette 86/01)**

(54) **VERFAHREN UND SCHALTUNG ZUR VERMEIDUNG VON NICHTLINEARITÄTEN UND AUFHELLUNGEN AN DEN BILDKANTEN BEI FERNSEHAUFNAHMERÖHREN.**

(30) Priorität: **12.06.84 DE 3421684**

(43) Veröffentlichungstag der Anmeldung:
**11.06.86 Patentblatt 86/24**

(45) Bekanntmachung des Hinweises auf die Patenterteilung:
**10.05.89 Patentblatt 89/19**

(84) Benannte Vertragsstaaten:
**FR GB NL**

(56) Entgegenhaltungen:
**GB-A-2 060 079**
**GB-A-2 095 958**
**US-A-3 755 707**

(73) Patentinhaber: **ROBERT BOSCH GMBH, Postfach 50, D-7000 Stuttgart 1 (DE)**

(72) Erfinder: **GEHRMANN, Rainer, Spiessgasse 13b, D-6146 Alsbach- Hähnlein 2 (DE)**

EP 0 183 740 B1

## Beschreibung

### Stand der Technik

Die Erfindung geht aus von einem Verfahren und einer Schaltung zur Vermeidung von Nichtlinearitäten und Aufhellungen an den Bildkanten durch Überabtastung des aktiven Bildbereichs auf der Signalelektrode einer Fernsehaufnahmeröhre.

Bei der zweidimensionalen Abtastung der Signalelektrode einer Fernsehaufnahmeröhre mit Hilfe eines Elektronenstrahles wurde bisher im wesentlichen nur der aktive Bildbereich entladen. Der diesen Bildbereich umgebende Bereich der Signalelektrode wird jedoch durch einfallendes Licht ebenfalls aufgeladen, so daß bei Nichtabtastung dieses Umgebungsbereichs Ladung stehenbleibt, die sich schnell akkumuliert. Diese Ladung kann nun in den aktiven Bildbereich abfließen und verursacht dadurch eine Bildaufhellung an den vier Rädern des aktiven Bildbereichs. Außerdem wird der Elektronenstrahl an diesen vier Bildrändern oder -kanten durch das im Umgebungsbereich angesammelte hohe Ladungsgebirge zusätzlich ausgelenkt, wodurch Nichtlinearitäten an den Bildkanten (sogen. Kantenausbiegungen), also Verzerrungen des Bildes im Randbereich, sowohl in horizontaler als auch in vertikaler Richtung hervorgerufen werden. Ferner sind diese Ladungsgebirge maßgeblich an Flimmereffekten im linken Bereich der oberen Randzone der Signalelektrode beteiligt, insbesondere bei 1/2"-Aufnahmeröhren.

Zur Verminderung dieser Verzerrungen ist aus der DE-A-3 211 749 ein Verfahren gemäß der Gattung des Hauptanspruchs bekannt. Hierbei werden den Horizontal- und Vertikal-Sägezahnablenksignalen während der Austastintervalle zur Überabtastung Zusatzspannungen selektiv zuaddiert, so daß die Geschwindigkeit der Abtastung kurz vor und kurz nach der Rücklaufperiode erhöht, z. B. verdoppelt oder verdreifacht, wird. Nachteilig dabei ist jedoch, daß die Zeilenabstände oberhalb der oberen und unterhalb der unteren Bildkante wesentlich größer als innerhalb des aktiven Bildbereichs sind. Dadurch werden die in diesem Umgebungsbereich vorhandenen Ladungen nur ungenügend entladen, weil zwischen den Abtastzeilen Ladungen stehenbleiben und weiterhin Nichtlinearitäten und Bildaufhellungen verursachen.

Der vorliegenden Erfindung liegt daher die Aufgabe zugrunde, ein Verfahren der eingangs genannten Art anzugeben, mit dem noch vorhandene Nichtlinearitäten in der Nähe der oberen und unteren Bildkante sicher vermieden werden.

Gelöst wird diese Aufgabe durch die im Kennzeichen des Hauptanspruchs angegebenen Merkmale.

### Vorteile der Erfindung

Das erfindungsgemäße Verfahren hat den Vorteil, daß mit relativ geringem Mehraufwand im zeitlichen Mittel alle Ladungen oberhalb der oberen und unterhalb der unteren Bildkante - also nicht nur diejenigen im Bereich der vorgegebenen festen Abtastzeilen eines gedehnten Rasters - neutralisiert werden können.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, wenn den negativ bzw. positiv gerichteten Signalamplituden des Rauschsignals die zuvor abgeschnittenen positiv bzw. negativ gerichteten Signalamplituden invertiert überlagert werden, wodurch eine praktisch vollständige Entladung der Überabtastbereiche möglich ist.

### Zeichnung

Ein Ausführungsbeispiel der Erfindung ist in der Zeichnung dargestellt und in der nachfolgenden Beschreibung näher erläutert. Es zeigen:

Fig. 1    ein Blockschaltbild zur Durchführung des erfindungsgemäßen Verfahrens,
Fig. 2    Diagramme einiger der in Fig. 1 vorkommenden Signale,
Fig. 3    das auf der Signalelektrode geschriebene Abtastraster,
Fig. 4    ein Blockschaltbild für eine andere Erzeugung des Zusatzsignals.

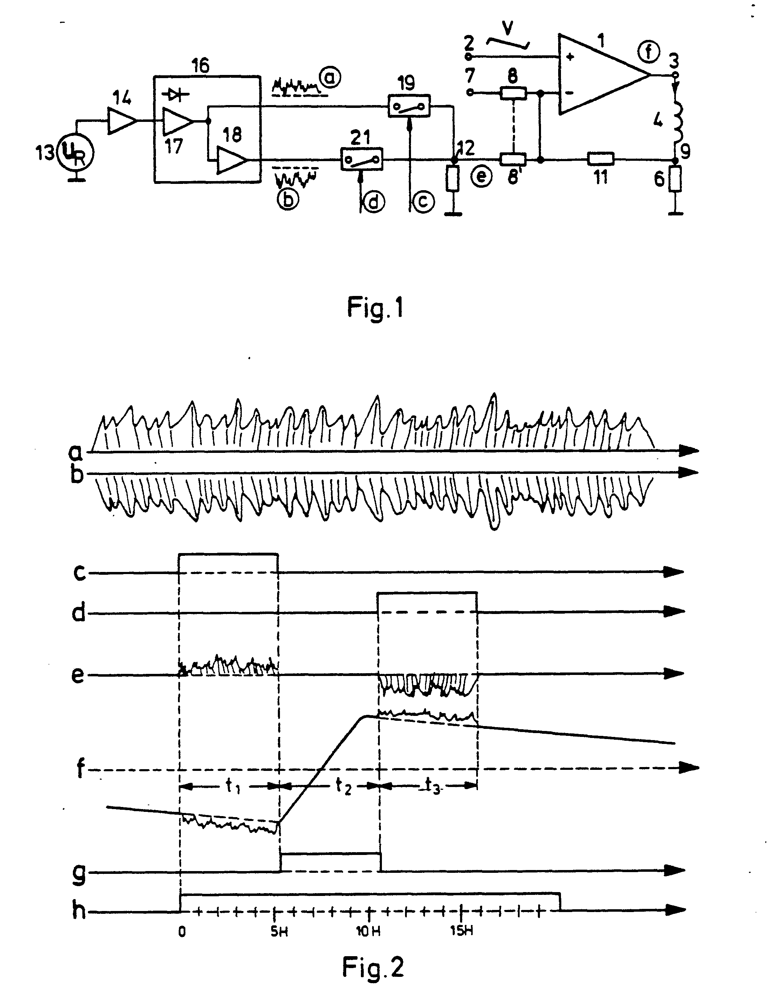

In dem Blockschaltbild gem. Fig. 1 ist ein Differenzverstärker 1 vorgesehen, dessen nichtinvertierendem Eingang das sägezahnförmige Vertikal-Ablenksignal über Klemme 2 zugeführt wird. Am Ausgang 3 ist das Vertikal-Ablenkspulenpaar 4 angeschlossen und über einen Widerstand 6 mit Masse verbunden. Am invertierenden Eingang liegen verschiedene Korrektursignale (wie z. B. parabelförmige Signale), wobei nur eine Zuführung über die Klemme 7 und einen Widerstand 8 beispielsweise dargestellt ist. Zur Regelung des Vertikalablenksignals ist beim Verbindungspunkt 9 von Ablenkspulen 4 und Widerstand 6 eine Rückführung über einen Widerstand zum invertierenden Eingang vorgesehen.

Dem invertierenden Eingang des Differenzverstärkers 1 wird weiterhin das Zusatzsignal gemäß der Erfindung vom Verbindungspunkt 12 über den Widerstand 8' zugeführt. Hierbei wird von einer Rauschsignalquelle 13 (beispielsweise eine Zenerdiodenschaltung) ein Rauschsignal $U_R$ erzeugt und über einen Verstärker 14 verstärkt an eine Begrenzer- und Inverterschaltung 16 geführt. Diese Schaltung 16 besteht aus einer Gleichrichterstufe 17, an deren Ausgang ein Rauschsignal mit nur positiv gerichteten Signalamplituden gemäß Fig. 2a abnehmbar ist. Dieses Signal wird einerseits direkt und andererseits über eine Inverterstufe 18 zur Erzeugung eines Signal mit nur negativ gerichteten Signalamplituden gemäß Fig. 2b an je eine Schaltstufe 19 bzw. 21 geführt. Diese Schaltstufen 19 und 21 werden von Impulssignalen c bzw. d gemäß Fig. 2 betrieben, so daß nur während der Zeit $t_1$ kurz vor der Rücklaufperiode $t_2$ das Signal mit positiv gerichteten Amplituden und während der Zeit $t_3$ kurz nach der Rücklaufperiode $t_1$ das Signal mit negativ gerichteten Amplituden an den Verbindungspunkt 12 übertragen wird.

Das am Punkt 12 somit abnehmbare Zusatzsignale gemäß Fig. 2 wird über den Widerstand 8' dem invertierenden Eingang des Differenzverstärkers 1 zugeführt und dem Vertikal-Ablenksignal somit invers zugesetzt, so daß am Ausgang 3 ein Vertikalablenksignal mit Zusatzsignal gemäß Fig. 2f entsteht. Während der Rücklaufperiode $t_2$ des Elektronenstrahls wird die Kathode der Fernsehaufnahmeröhre mit Hilfe des Impulssignals g gemäß Fig. 2 ausgetastet. Diese Zusatzsignalteile werden innerhalb des Austastintervalls h gemäß Fig. 2 (beispielsweise dargestellt für ein Signal nach dem NTSC-Standard) dem Ablenksignal zugesetzt.

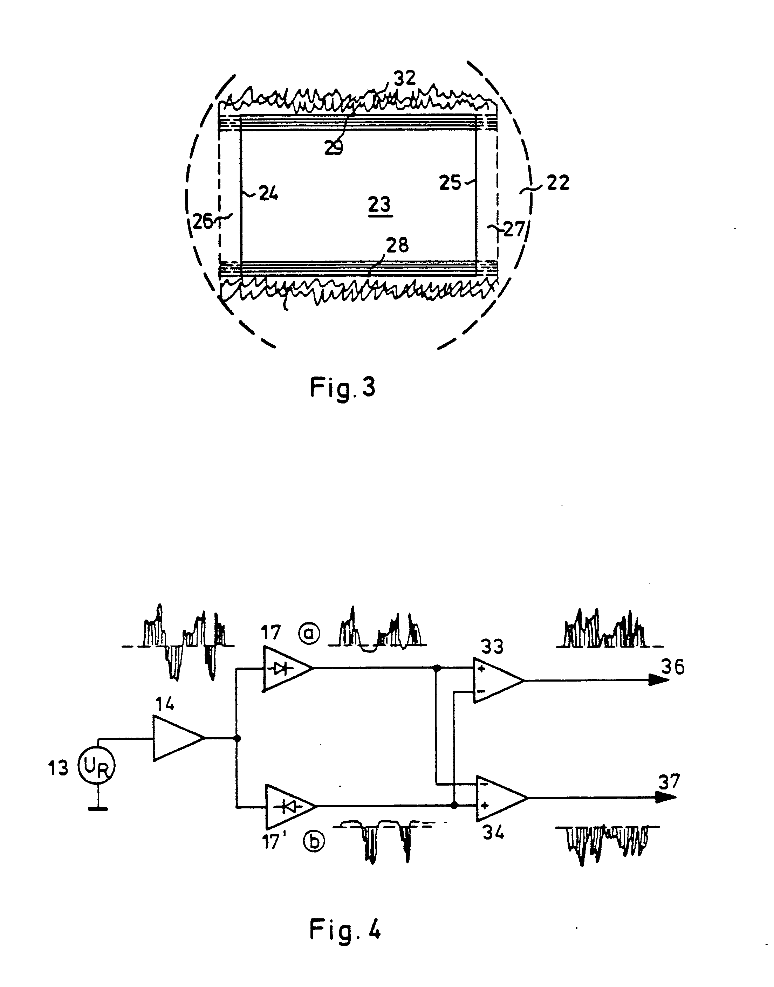

Durch das Hinzufügen des Zusatzsignals zum Vertikal-Ablenksignal gemäß Fig. 2f wird die (gestrichelt dargestellte) Signalelektrode 22 gemäß Fig. 3 im aktiven Bildbereich 23 und über die senkrechten Kanten 24, 25 bis zu je einem Streifen 26, 27 hinaus linear und über die waagerechten Kanten 28, 29 hinaus innerhalb je eines gewissen Streifens 31, 32 diffus abgetastet. Dadurch gelingt es, insbesondere auch das in vertikaler Richtung oberhalb der Oberkante 29 und unterhalb der Unterkante 28 vorhandene Ladungsgebirge vollständig zu beseitigen.

Eine weitere, verbesserte Möglichkeit das Zusatzsignal zu erzeugen, besteht mit der in Fig. 4 dargestellten Schaltung. Hierbei wird das von der Rauschsignalquelle 13 erzeugte und im Verstärker 14 verstärkte Rauschsignal $U_R$ zwei Gleichrichterstufen 17 und 17' zugeführt, an deren Ausgängen jeweils ein Rauschsignal mit positiv gerichteten Signalamplituden (gemäß Fig. 2a) und ein Rauschsignal mit negativ gerichteten Signalamplituden (gemäß Fig. 2b) abnehmbar sind. Die Ausgänge der Gleichrichterstufen 17 bzw. 17' sind jeweils einerseits mit dem nichtinvertierenden Eingang je eines Differenzverstärkers 33 bzw. 34 und andererseits mit dem invertierenden Eingang des jeweils anderen Differenzverstärkers 34 bzw. 33 verbunden. Durch diese vorteilhafte Maßnahme gelingt es nun, daß an den Ausgängen 36 und 37 nicht nur die Signale gemäß Fig. 2a und b abnehmbar sind, sondern daß die aus dem Rauschsignal $U_R$ abgetrennten negativ gerichteten Signalamplituden des Signals b in die Zwischenräume der positiv gerichteten Signalamplituden des Signals a eingesetzt werden und umgekehrt. An den Ausgängen 36 und 37 sind somit Zusatzsignalanteile abnehmbar, deren Amplitudenverlauf in der jeweiligen Richtung lückenlos ist und deren Abschneidepegel mit der Nullinie übereinstimmt.

Obwohl im vorliegenden Ausführungsbeispiel mit der Signalquelle 13 ein Rauschsignal $U_R$ erzeugt wird, können selbstverständlich auch andere Signalformen, wie z. B. sinusförmige Signale, welche mit einem frei schwingenden Oszillator erzeugbar sind, zur Ableitung des Zusatzsignals benutzt werden.

**Patentansprüche**

1. Verfahren zur Vermeidung von Nichtlinearitäten und Aufhellungen an den Bildkanten durch Überabtastung des aktiven Bildbereichs auf der Signalelektrode einer Fernsehaufnahmeröhre, wobei den sägezahnförmigen Ablenksignalen für die Horizontal- und Vertikalrichtung jeweils unmittelbar vor und nach der Rücklaufperiode innerhalb des Austastintervalls ein Zusatzsignal hinzugefügt wird, dadurch gekennzeichnet, daß dem vertikalen Ablenksignal als Zusatzsignal ein aus einem Frequenzgemisch bestehendes Signal hinzugefügt wird und daß der vor der Rücklaufperiode hinzugefügte Teil des Zusatzsignals nur aus negativ gerichteten und der nach der Rücklaufperiode hinzugefügte Teil nur aus positiv gerichteten Signalamplituden besteht.

2. Verfahren nach Anspruch 1, dadurch gekennzeichnet, daß das Zusatzsignal aus von einer Rauschsignalquelle (13) erzeugten statistischem Rauschen ($U_R$) besteht.

3. Verfahren nach Anspruch 1 und 2, dadurch gekennzeichnet, daß den negativ bzw. positiv gerichteten Signalamplituden des Rauschsignals ($U_R$) die zuvor abgeschnittenen positiv bzw. negativ gerichteten Signalamplitudeninvertiert überlagert werden.

4. Verfahren nach Anspruch 1, dadurch gekennzeichnet, daß das Zusatzsignal aus von einem frei schwingenden Oszillator erzeugten Sinusschwingungen besteht.

5. Schaltung zur Vermeidung von Nichtlinearitäten und Aufhellungen an den Bildkanten durch Überabtastung des aktiven Bildbereichs auf der Signalelektrode einer Fernsehaufnahmeröhre, wobei den sägezahnformigen Ablenksignalen für die Horizontal- und Vertikalrichtung jeweils unmittelbar vor und nach der Rücklaufperiode innerhalb des Austastintervalls ein Zusatzsignal hinzugefügt wird, dadurch gekennzeichnet, daß die Signalquelle (13) zur Erzeugung des Zusatzsignals über eine Begrenzer- und Inverterschaltung (16) mit je einer für die positiv (a) und negativ (b) gerichteten Signalamplituden entsprechend gesteuerten Schaltstufe (19, 21) verbunden ist, daß die Ausgänge der Schaltstufen (19, 21) zusammen an einem Summierpunkt (12) angeschlossen sind, und daß der Summierpunkt (12) mit einem Eingang eines Differenzverstärkers (1) verbunden ist, an dessen anderem Eingang (2) das vertikale Ablenksignal anliegt, und an dessen Ausgang (3) das Vertikal-Ablenkspulenpaar (4) angeschlossen ist.

6. Schaltung nach Anspruch 5, dadurch gekennzeichnet, daß die Begrenzerschaltung (16) aus einer Gleichrichterstufe (17) besteht, an deren Ausgang einerseits die positiv gerichteten Signalamplituden (a) des Zusatzsignals direkt abnehmbar sind, und daß außerdem der Ausgang der Gleichrichterstufe (17) an die Inverterschaltung (18) angeschlossen ist, an deren Ausgang andererseits die negativ gerichteten Signalamplituden (b) des Zusatzsignals abnehmbar sind.

7. Schaltung nach Anspruch 3 und 5, dadurch gekennzeichnet, daß die Begrenzer- und Inverterschaltung (16) aus zwei entgegengesetzt gerichteten Gleichrichterstufen (17, 17') besteht, an deren Ausgängen jeweils die positiv (a) und negativ (b) gerichteten Signalamplituden des Zusatzsignals abnehmbar sind, daß die Ausgänge der Gleichrichterstufen (17, 17') für die positiv bzw. negativ gerichteten Signalamplituden einerseits jeweils mit dem nichtinvertierenden Eingang eines ersten bzw. zweiten Differenzverstärkers (33 bzw. 34) und andererseits jeweils mit dem invertierenden Eingang des zweiten bzw. ersten Differenzverstärkers verbunden sind, und daß am Ausgang des ersten bzw. zweiten Differenzverstärkers die positiv bzw. negativ gerichteten Signalamplituden mit den überlagerten invertierten negativ bzw. positiv gerichteten Signalamplituden des Zusatzsignals abnehmbar sind.

### Claims

1. Method for avoiding non-linearities and brightening effects on the picture edges through overscanning the active picture area on the signal electrode of a camera tube, in which to the sawtooth deflection signals for the horizontal and vertical direction are in each case added, immediately before and after the flyback period within the blanking interval, and additional signal, characterized in that to the vertical deflection signal is added as the additional signal a signal comprising a frequency mixture and that the part of the additional signal added prior to the flyback period only comprises negatively directed signal amplitudes, whilst that part added after the flyback period only comprises positvely directed signal amplitudes.

2. Method according to claim 1, characterized in that the additional signal comprises statistical noise ($U_R$) produced by a noise signal source (13).

3. Method according to claims 1 and 2, characterized in that the previously clipped positively or negatively directed signal amplitudes are superimposed in inverted manner on the negatively or positively directed signal amplitudes of the noise signal ($U_R$).

4. Method according to claim 1, characterized in that the additional signal comprises sine-wave oscillations produced by a freely oscillating oscillator.

5. Circuit for avoiding non-linearities and brightening effects on picture edges through overscanning the active picture area on the signal electrode of a camera tube, in which to the sawtooth deflection signals for the horizontal and vertical direction is in each case added directly before and after the flyback period within the blanking interval, and additional signal, characterized in that the signal source (13) for producing the additional signal is connected across a limiting and inverting circuit (16) with in each case one switching stage (19, 21) correspondingly controlled for the positively (a) and negatively (b) directed signal amplitudes, that the outputs of the switching stages (19, 21) are together connected to a summing junction (12) and that the summing junction (12) is connected to one input of a differential amplifier (1), to whose other input (2) is applied a vertical deflection signal and to whose output (3) is connected the vertical deflection coil pair (4).

6. Circuit according to claim 5, characterized in that the limiting circuit (16) comprises a rectifier stage (17) from whose output can be taken directly on the one hand the positively directed signal amplitudes (a) of the additional signal and that also the output of rectifier stage (17) is connected to the inverting circuit (18), at whose output can on the other hand be taken the negatively directed signal amplitudes (b) of the additional signals.

7. Circuit according to claims 3 and 5, characterized in that the limiting and inverting circuits (16) comprises two oppositely directed rectifier stages (17, 17'), from whose outputs can in each case be taken the positively (a) and negatively (b) directed signal amplitudes of the additional signal, that the outputs of the rectifier stages (17, 17') for the positively or negatively directed signal amplitudes are on the one hand connected to the non-inverting input of a first or second differential amplifier (33, 34) and on the other hand to the inverting input of the second or first differential amplifier and that at the output of the first or second differential amplifier can be taken the positively or negatively directed signal amplitudes with the superimposed inverted negative or positively directed signal amplitudes of the additional signal.

### Revendications

1. Procédé pour éviter des non linéarités et l'apparition de zones claires sur les bords d'images par surexploration de la zone active de l'image sur l'électrode collectrice d'un tube de prise de vues en télévision, procédé dans lequel on ajoute aux signaux de déviation en forme de dents de scie pour la direction horizontale et pour la direction verticale, respectivement immédiatement avant et après la période de retour à l'intérieur de l'intervalle de suppression, un signal additionnel, procédé caractérisé en ce qu'on ajoute au signal de déviation vertical en tant que signal additionnel, un signal constitué d'un melange de fréquence, et que la partie de ce signal additionnel ajoutée avant la période de retour n'est constituée que d'amplitudes de signal orientées négativement, tandis que la partie ajoutée après la période de retour n'est constituée que d'amplitudes de signaux orientées positivement.

2. Procédé selon la revendication 1, caractérisé en ce que le signal additionnel est constitué de bruits statistiques ($U_R$) engendrés par une source de signal de bruits (13).

3. Procédé selon les revendications 1 et 2, caractérisé en ce qu'aux amplitudes orientées négativement ou bien positivement du signal de bruit ($U_R$) sont superposées, en étant inversées, les amplitudes de signaux orientées positivement ou bien négativement, préalablement découpées.

4. Procédé selon la revendication 1, caractérisé en ce que le signal additionnel est constitué d'oscillations sinusoïdales engendrées par un oscillateur oscillant librement.

5. Circuit pour éviter des non linéarités et l'apparition de zones claires sur les bords d'image par surexploration de la zone active de l'image sur l'électrode collectrice d'un tube de prise de vues en télévision, un signal additionnel étant respectivement ajouté immédiatement avant et après la période de retour à l'intérieur de l'intervalle de suppression, aux signaux de déviation en forme de dents de scie pour la direction horizontale et la direction verticale, circuit caractérisé en ce que la source de signaux (13) permettant d'engendrer le signal supplémentaire, est reliée par l'intermédiaire d'un circuit limiteur et inverseur (16), avec respectivement un étage de commutation (19, 21) commandé de façon correspondante pour les amplitudes de signaux orientées positivement (a) et négativement (b), les sorties de ces etages de commutation (19, 21) étant raccordées en commun à un point de totalisation (12), et ce point de totalisation (12) étant relié à une entrée d'un amplificateur différentiel (1) à l'autre entrée (2) duquel est appliqué le signal de déviation vertical et à la sortie (3) duquel est raccordée la paire de bobines (4) de déviation verticale.

6. Circuit selon la revendication 5, caractérisé en ce que le circuit limiteur (16) est constitué par un étage redresseur (17) à la sortie duquel peuvent être, d'une part, prélevées directement, les amplitudes orientées positivement (a) du signal additionnel, et, qu'en outre, la sortie de l'étage redresseur est raccordée au circuit inverseur (18) à la sortie duquel peuvent être, d'autre part, prélevées les amplitudes orientées négativement (b) du signal additionnel.

7. Circuit selon les revendications 3 et 5, caractérisé en ce que le circuit limiteur et inverseur (16) est constitué par deux étages redresseurs (17, 17') orientés de façon opposée, aux sorties desquels peuvent être respectivement prélevées les amplitudes orientées positivement (a) et les amplitudes orientées négativement (b) du signal additionnel, les sorties des étages redresseurs (17, 17') pour les amplitudes de signal orientées positivement ou bien négativement, étant, d'une part, reliées respectivement avec l'entrée non inversée d'un premier ou bien d'un second amplificateur différentiel (33 ou bien 34) et, d'autre part, respectivement avec l'entrée inversée du second ou bien du premier amplificateur différentiel, et à la sortie du premier ou bien du second amplificateur différentiel, les amplitudes orientées positivement ou bien négativement sont susceptibles d'être prélevées avec les amplitudes inversées superposées, orientées négativement ou bien positivement, du signal additionnel.

EP 0 183 740 B1

Fig.1

Fig.2

1

Fig. 3

Fig. 4